# EUROPÄISCHE PATENTANMELDUNG

(11) **EP 0 591 965 A2**
(43) Veröffentlichungstag der Anmeldung: **13.04.1994**
(21) Anmeldenummer: 93116238.2
(22) Anmeldetag: 07.10.1993
(51) Int. Cl.: B60T 15/24

(54) **Anhänger-Steuerventil für druckmittelbetätigte Bremsanlagen von Nutzfahrzeugen**

(30) Priorität: 09.10.1992 DE 4234098
(71) Anmelder: KNORR-BREMSE SYSTEME FÜR NUTZFAHRZEUGE GmbH, 80809 München (DE)
(72) Erfinder: Brungs, Siegfried, Dr., D-80993 München (DE); Tischler, Karl Heinz, D-80797 München (DE)

(57) **Zusammenfassung**

Bei einem Anhänger-Steuerventil für druckmittelbetätigte Bremsanlagen von Nutzfahrzeugen sind wenigstens ein Steuerkolben (13;19) und zwei Rückwirkkolben (27,31) vorgesehen. Der dem ausgesteuerten Druck des Ventils ausgesetzte erste Rückwirkkolben (27) trägt einen an ihm längenverstellbaren Mitnehmerbund (43), welcher bei Rückwirkbewegung des ersten Rückwirkkolbens (27) gegenüber einer ersten, in einem Käfig (47) gehalterten Feder (49) zur Anlage gelangt. Der zweite Rückwirkkolben (31) umschließt den ersten Rückwirkkolben (27) und ist nach Maßgabe des an ihm zur Wirkung gelangenden, ausgesteuerten Druckes gegenüber einer zweiten Feder (51) bewegbar, derart, daß mit Hilfe des ersten und des zweiten Rückwirkkolbens und der gegenüber diesen wirkenden Federn eine Beeinflussung des ausgesteuerten Bremsdruckes hinsichtlich der Voreilung erfolgt. Es sind Mittel vorgesehen, welche den Einstellbereich der Voreilung begrenzen.

## Beschreibung

Die Erfindung betrifft ein Anhänger-Steuerventil nach dem Gattungsbegriff des Patentanspruches 1.

Mit Anhänger-Steuerventilen ausgestatte Druckluftbremsanlagen von aktueller Konstruktion werden üblicherweise mit maximal 8 bar Bremsdruck betrieben, wobei der maximale Bremsdruck für Anhängerbremsanlagen nach bestehenden EG-Richtlinien auf 7,5 bar begrenzt ist. Um die maximale Abbremsung des Zugfahrzeuges bei weitgehend unveränderter Bremsanlage zu erhöhen, wird angestrebt, den maximalen Betriebsbremsdruck im Zugfahrzeug gegenüber bisher üblichen Werten anzuheben. Die Bremskraftverteilung zwischen Zugfahrzeug und Anhänger soll sich gegenüber 8 bar-Anlagen im unteren Druckbereich jedoch nicht verändern; erst bei höherem Bremsdruck ist eine Nacheilung des Anhängerbremsdruckes erwünscht.

Die Aufgabe der Erfindung besteht darin, ein Anhänger-Steuerventil der gattungsgemäßen Art so auszugestalten, daß es den vorstehenden Anforderungen bei Anhebung des Betriebsbremsdruckes im Zugfahrzeug entspricht.

Zur Lösung dieser Aufgabe dienen die Merkmale nach dem Kennzeichnungsteil des Patentanspruches 1.

Mit Hilfe der zwei gegenüber Federkraft wirkenden Rückwirkkolben ist es ermöglicht, die erforderliche Druckanpassung zu erreichen, derart, daß im unteren Druckbereich die erwünschte Druckvoreilung realisierbar ist und im höheren Druckbereich mit der erwünschten Nacheilung des Anhängerbremsdruckes gegenüber dem höheren Bremsdruck im Zugfahrzeug gefahren werden kann. Zum Einstellen der Voreilung des Ventils ist es lediglich erforderlich, die gegenüber der ersten Feder zur Wirkung gelangende Mitnehmerhülse in ihrer Relativlage zu dem die erste Feder abstützenden Stützring zu verstellen, wobei in vorteilhafter Weise Mittel vorgesehen sind, welche den Einstellbereich der Voreilung begrenzen. Die Lage des zweiten Knickpunktes im Verlauf des ausgesteuerten Druckes kann durch Positionsveränderung des die beiden Federn tragenden Käfigs ebenfalls eingestellt werden.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.
Fig.1 zeigt in Längsschnittansicht ein Anhänger-Steuerventil nach der Erfindung;
Fig.2 gibt in vergrößerter Teilschnittansicht die Einrichtung zur Begrenzung des Einstellbereiches der Voreilung wieder; und
Fig.3 gibt den Verlauf des ausgesteuerten Druckes gegenüber dem eingesteuerten Druck bei Verwendung der erfindungsgemäßen Einrichtung wieder.

Das in der Zeichnung dargestellte Anhängersteuerventil ist für Druckluftbremsanlagen von Kraftfahrzeugen mit Anhängerbetrieb vorgesehen. Es weist an einem Gehäuse 1 einen Anschluß 3 und einen Anschluß 5 auf, welche für einen ersten und einen zweiten Betriebsbremskreis vorgesehen sind. Ein weiterer Anschluß 7 ist an den Bremskreis einer Feststellbremse angeschlossen. Ein Anschluß 9 ist an einen Vorratsdruck führenden Druckluftspeicher angeschlossen, von welchem in nachfolgend beschriebener Weise mittels des erfindungsgemäßen Ventils Druckluft über einen Anschluß 11 ausgesteuert wird. Der Anschluß 11 ist mit einer zu einem Kupplungskopf führenden Anhängerbremsleitung verbunden, wobei mit Hilfe des Anhängersteuerventils ein Druck der nachfolgend beschriebenen Art in die Anhängerbremsleitung eingespeist wird.

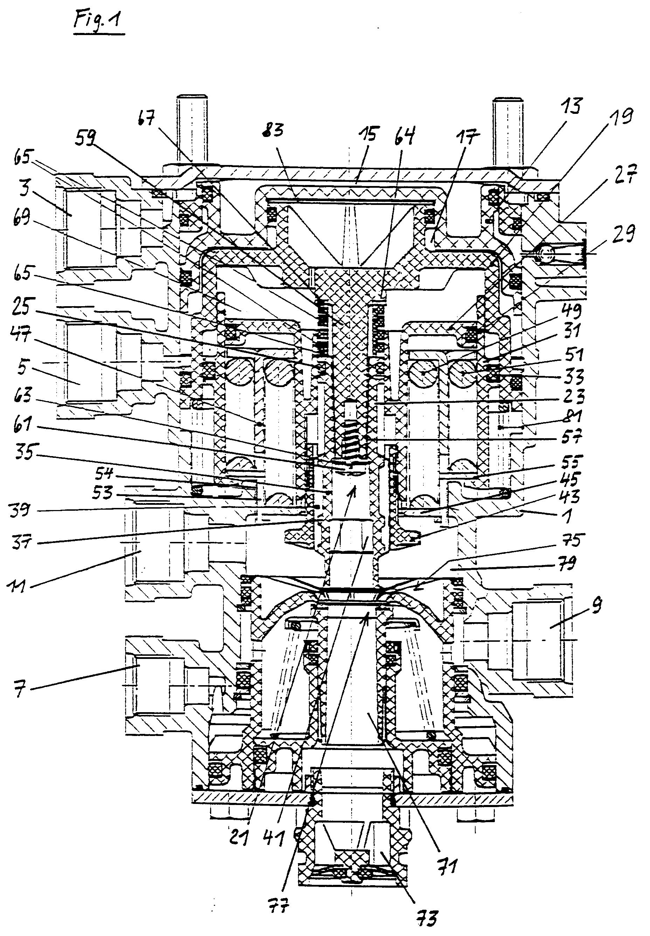

Innerhalb des Gehäuses 1 ist oberhalb eines ersten Steuerkolbens 13 eine erste Steuerkammer 15 vorgesehen, welche mit dem Anschluß 13 des ersten Bremskreises verbunden ist; unterhalb des Steuerkolbens 13 befindet sich eine zweite Steuerkammer 17, welche an der Unterseite durch einen weiteren Steuerkolben 19 begrenzt ist. Die Steuerkammer 17 ist gemäß Darstellung nach Fig.1 mit dem Anschluß 5 des zweiten Bremskreises verbunden.

Der zweite Steuerkolben 19 trägt mittels einer nachfolgend beschriebenen kardanischen Aufhängung 21 einen zylindrischen Fortsatz 23; dieser ist bei Abdichtung mittels eines O-Ringes 25 durch einen Rückwirkkolben 27 umgeben. Der Rückwirkkolben 27 ist unter Abdichtung mittels eines O-Rings 29 relativ verschieblich gegenüber einem zweiten Rückwirkkolben 31 geführt. Der zweite Rückwirkkolben 31 ist seinerseits unter Abdichtung mittels eines O-Rings 33 verschiebbar gegenüber dem Innenumfang des Steuerkolbens 19 geführt. In der Darstellung am unteren Ende des ersten Rückwirkkolbens 27 ist eine Mitnehmerhülse 35 vorgesehen, welche mit dem Rückwirkkolben verschraubt ist. Die Mitnehmerhülse 35 ist in Längsrichtung entlang des Fortsatzes 23 bewegbar, wobei vom Fortsatz nach außen kragende Keile 37 in Nuten 39 der Mitnehmerhülse geführt sind.

Im Inneren des Fortsatzes 23 befindet sich ein Schraubeinsatz 41 z.B. in Form eines Innensechskants, welcher in nachfolgend beschriebener Weise zur Aufnahme eines von außerhalb eingeführten Drehwerkzeuges dient, um bei Drehung des Fortsatzes 23 die mittels der Keile 37 drehbar mit dieser verbundene Mitnehmerhülse 35 zu verdrehen, derart, daß sich diese infolge ihres Gewindeeingriffs am drehfest gehaltenen Rückwirkkolben 27 entlang diesem in Längsrichtung bewegen läßt. Am in der Darstellung unteren Ende der Mitnehmerhülse 35 befindet sich ein auskragender Mitnehmerbund 43, welcher bei einer nach oben gerichteten Bewegung in Anlage mit einem Stützring 45 gelangt. Der Stützring 45 ist Bestandteil eines zweiteiligen Federkäfigs 47, an welchem eine innere Feder 49 und eine äußere Feder 51 unter Verspannung gehaltert sind. Der Käfig 47 ist stationär im Gehäuse angeordnet und befindet sich mittels eines unteren Fortsatzes 53 im Gewindeeingriff mit einem am Innenumfang des Gehäuses 1 ausgebildeten Gewinde 54, derart, daß der Käfig höhenverstellbar im Gehäuse 1 gehalten ist.

Die beiden Federn 49 und 51 stützen sich an ihrem gemäß Darstellung oberen Ende jeweils an einem seitlich auskragenden Flansch des Käfigs an, wobei die Feder 51 an ihrem unteren Ende an einem Stützring 55 abgestützt ist. Die beiden Stützringe 45 und 55 lassen sich in nachfolgend beschriebener Weise in Längsrichtung entlang des Fortsatzes 53 verschieben.

Der zweite Steuerkolben 19 ist mittels der kardananischen Aufhängung 21 mit dem Fortsatz 23 verbunden. Hierbei umgibt das obere Ende des Fortsatzes 23 unter Bildung eines um den gesamten Innenumfang verlaufenden Spalts 57 einen in den Fortsatz sich erstreckenden Kolbenschaft 59 des Steuerkolbens 19. In das untere Ende des Kolbenschafts 19 ist eine Stellschraube 61 eingeschraubt, wobei sich eine Blattfeder 63 zwischen der Stellschraube und einer Schulter am Innenumfang des Fortsatzes 23 abstützt.

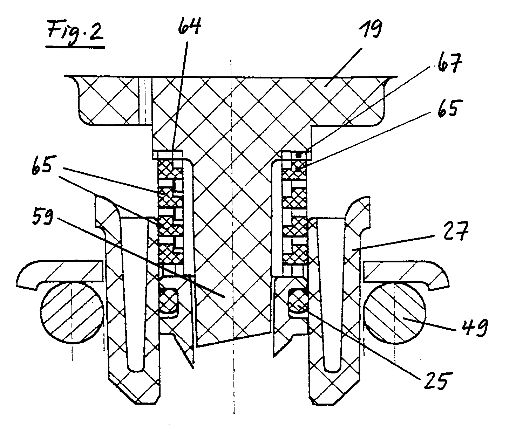

Zwischen den oberen Ende des Fortsatzes 23 und einer Innenschulter 64 des zweiten Steuerkolbens 19 befindet sich eine aus Ringen 65 gebildete Einrichtung, mittels welcher eine nachträgliche Verstellung der Voreilung i des ausgesteuerten Druckes p22 unter oder über einen bestimmten Wert hinaus verhinderbar ist. Der in der Anordnung nach Fig.1 und 2 oberste Ring 65 ist über eine Verzahnung 67 mit dem Steuerkolben 19 zentriersicher verbunden, wenn die Stellschraube 61 angezogen ist. Die Ringe 65 sind jeweils begrenzt drehbar zueinander ausgebildet, wobei jeweils ein Nocken eines Ringes in eine über einen bestimmten Winkelbetrag sich erstreckende Führung des angrenzenden Ringes eingreift und das obere Ende des Fortsatzes 23 in gleicher Weise baulich dem untersten Ring 65 zugeordnet ist. Wird der Fortsatz 23 durch Einführen eines Werkzeuges in den Schraubeinsatz 41 gedreht, so wird das obere Ende des Fortsatzes bezüglich des nächstliegenden Ringes 65 um einen vorbestimmten Winkelbetrag gedreht, wonach dieser Ring seinereits gegenüber dem nächstliegenden Ring einen vorbestimmten Winkelbetrag drehbar ist etc. Da der oberste Ring 65 mit dem Steuerkolben 19 in Verzahnungs-Eingriff ist, ist die Gesamtdrehung des Fortsatzes 23 gegenüber dem Kolbenschaft 59 und somit die Drehung der Mitnehmerhülse 35 gegenüber dem ersten Rückwirkkolben 27 stufenweise begrenzt. Die nachträgliche Verstellung der Voreilung i, verursacht durch eine Veränderung des Abstandes der Mitnehmerhülse 35 gegenüber der Stützplatte 45, ist folglich nur um einen vorbestimmten Betrag möglich. Die untere oder obere Begrenzung des Einstellbereiches läßt sich verändern, wenn die Stellschraube 61 gelockert wird und folglich der oberste Ring 65 aus seinem Verzahnungseingriff mit der zugewandten Schulter des Steuerkolbens 19 gelöst wird. Wird der Fortsatz 23 zum Zwecke der Positionsveränderung der Mitnehmerhülse 35 nunmehr gedreht, so läßt sich das gesamte Paket von Ringen in seiner Gesamtheit relativ zum Steuerkolben 19 drehen. Nach Veränderung der oberen oder unteren Begrenzung des Einstellbereiches ist die Stellschraube 61 wieder anzuziehen, um den obersten Ring 65 mit der Innenschulter 64 des Steuerkolbens 19 in Verzahnungseingriff gelangen zu lassen.

Die Kammer 69 zwischen dem Steuerkolben 19 und den beiden Rückwirkkolben 27 und 31 ist durch den vorstehend genannten Spalt 57, den mittig durch das Ventil sich erstreckenden Kanal 71 und den an der Unterseite angeordneten Entlüftungsstutzen 73 mit Außenluft in Verbindung, wobei Volumenveränderungen in der Kammer 71 durch die vorbeschriebene Außenluftverbindung ausgeglichen werden.

Der weitere Aufbau des Anhängersteuerventils ist von herkömmlicher Art, d.h. der Fortsatz 23 bildet mit den in der Zeichnung darunter befindlich dargestellten Ventilelementen ein Einlaßventil 75 und ein Auslaßventil 77, über welche der Anschluß 11 entweder mit dem Druckluft führenden Anschluß 9 verbunden oder mit dem Entlüftungsstutzen 73 in Verbindung gebracht wird.

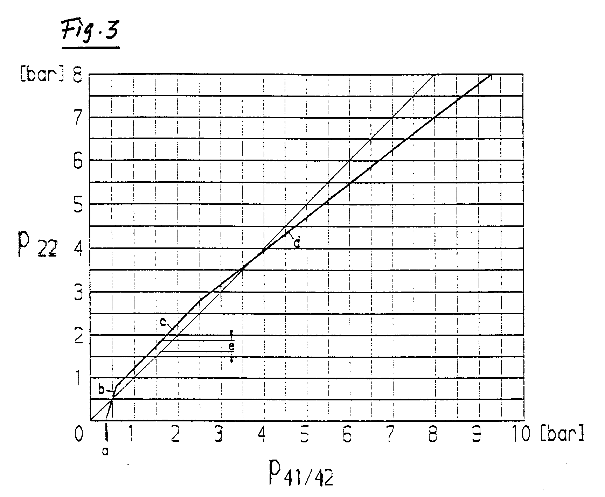

Die Wirkungsweise des Anhängersteuerventils vorstehend beschriebener Konstruktion ist wie folgt:
Bei gelöster Bremse nehmen die Bauteile des Ventils die in Fig.1 der Zeichnung dargestellte Lage ein, in welcher der mit der Anhängerbremsleitung verbundene Anschluß 11 bei geöffnetem Auslaßventil 77 mit dem Entlüftungsstutzen 73, also mit Außenluft, in Verbindung steht. Wird über die Anschlüsse 3 und/oder 5 ein Steuerdruck aufgebaut, bewegen sich die Steuerkolben 13 und/oder 19 gemäß Darstellung nach unten, das Auslaßventil 77 schließt und das Einlaßventil 75 öffnet. Im Raum 79 wird Druck aufgebaut; da die beiden Rückwirkkolben 27 und 31 zunächst durch die Federn 49 und 51 zurückgehalten werden, ist nur die kleine Reaktionsfläche 81 des Steuerkolbens 19 wirksam und es wird ein steiler Druckanstieg b gemäß Fig.3 erreicht. Der ausgesteuerte Druck eilt dem eingesteuerten Druck entsprechend der Steilheit des Druckanstiegs vor. Ab einem bestimmten Druck, der über die Mitnehmerhülse 35 eingestellt werden kann, kommt der Rückwirkkolben 27 gegen die Kraft der inneren Feder 49 am Steuerkolben 19 zur Anlage und die wirksame Reaktionsfläche vergrößert sich um die Fläche des Rückwirkkolbens 27. Es ergibt sich nunmehr ein Druckaufbau nach der flacheren Kennlinie c. Bei gleichen Flächenverhältnissen ist folglich ein proportionaler Druckanstieg zu verzeichnen. Nach einem weiteren Druckaufbau kommt auch der außenliegende Rückwirkkolben 31 gegen die Kraft der äußeren Feder 51 am Steuerkolben 19 zur Anlage und der weitere Druckverlauf erfolgt gemäß der Kennlinie d nach Fig.3. Die Lage des zweiten Knickpunktes beim Übergang des Druckverlaufes c zum Druckverlauf d kann durch Verdrehen des Käfigs 47 ebenfalls eingestellt werden.

Die bei zunehmendem Druck einsetzende Untersetzung des ausgesteuerten Druckes wird in bekannter Weise durch Abstimmung der Flächenverhältnisse an den Wirkflächen der beiden Steuerkolben erzielt. Die dem eingesteuerten Druck ausgesetzten Wirkflächen der beiden Steuerkolben sind im dargestellten Ausführungsbeispiel gegenüber der Rückwirkfläche reduziert, wobei die reduzierte Steuerfläche zwischen den Steuerkolben 13 und 19 durch eine Entlastungsfläche 83 gebildet ist.

### Bezugszeichenliste

- 1: Gehäuse
- 3: Anschluß
- 5: Anschluß
- 7: Anschluß
- 9: Anschluß
- 11: Anschluß
- 13: Steuerkolben
- 15: Steuerkammer
- 17: Steuerkammer
- 19: Steuerkolben
- 21: Aufhängung
- 23: Fortsatz
- 25: O-Ring
- 27: Rückwirkkolben
- 29: O-Ring
- 31: Rückwirkkolben
- 33: O-Ring
- 35: Mitnehmerhülse
- 37: Keil
- 39: Nut
- 41: Schraubeinsatz
- 43: Mitnehmerbund
- 45: Stützring
- 47: Käfig
- 49: Feder
- 51: Feder
- 53: Fortsatz
- 54: Gewinde
- 55: Stützring
- 57: Spalt
- 59: Kolbenschaft
- 61: Stellschraube
- 63: Blattfeder
- 64: Innenschulter
- 65: Ring
- 67: Verzahnung
- 69: Kammer
- 71: Kanal
- 73: Entlüftungsstutzen
- 75: Einlaßventil
- 77: Auslaßventil
- 79: Raum
- 81: Reaktionsfläche
- 83: Entlastungsfläche

## Patentansprüche

1. Anhänger-Steuerventil für druckmittel betätigte Bremsanlagen von Nutzfahrzeugen, mit wenigstens einem durch einen Steuerdruck aktivierbaren Steuerkolben, welcher auf einen Ventilmechanismus zum Aussteuern eines Bremsdruckes nach Maßgabe des Steuerdruckes einwirkt, und mit einem Rückwirkkolben, welcher dem ausgesteuerten Bremsdruck unterliegt und entgegen der Kraft des Steuerkolbens auf den Ventilmechanismus einwirkt, wobei Federmittel vorgesehen sind, welche der Gegenkraft des Steuerkolbens zuschaltbar sind, um eine Voreilung des ausgesteuerten Druckes gegenüber dem eingesteuerten Steuerdruck zu erzielen, gekennzeichnet durch wenigstens einen weiteren, gegen Federkraft zur Wirkung gelangenden Rückwirkkolben (31).

2. Anhänger-Steuerventil nach Anspruch 1, dadurch gekennzeichnet, daß der zweite Rückwirkkolben (31), gegen Federmittel (Feder 51) wirkend, den ersten Rückwirkkolben (27) umgibt und unter Abdichtung relativ zu diesem verschiebbar ist.

3. Anhänger-Steuerventil nach Anspruch 1 oder 2, dadurch gekennzeichnet, daß die Federmittel des ersten und des zweiten Rückwirkkolbens (27;31) aus in einem gehäusefesten Käfig (47) geführten Federn (49,51) bestehen, wobei die dem ersten Rückwirkkolben (27) entgegenwirkende Feder (49) innerhalb der dem zweiten Rückwirkkolben (31) entgegenwirkenden Feder (51) im Käfig (47) geführt ist.

4. Anhänger-Steuerventil nach einem der vorangehenden Ansprüche, dadurch gekennzeichnet, daß der zweite Rückwirkkolben (31) unter Abdichtung vom Steuerkolben (19) umgeben ist, derart, daß die zwischen dem zweiten Rückwirkkolben (31) und der Gehäuseinnenwand verbleibende Reaktionsfläche des Steuerkolbens (19) dem ausgesteuerten Bremsdruck direkt ausgesetzt ist.

5. Anhänger-Steuerventil nach einem der vorangehenden Ansprüche, dadurch gekennzeichnet, daß der erste Rückwirkkolben (27) einen an ihm in Längsrichtung verstellbaren Mitnehmerbund (43) trägt, welcher nach Maßgabe der Reaktionsbewegung des ersten Rückwirkkolbens gegenüber der im Käfig (47) an diesem abgestützten ersten Feder (49) zur Anlage verfahrbar ist.

6. Anhänger-Steuerventil nach Anspruch 5, dadurch gekennzeichnet, daß das dem Mitnehmerbund (43) zugewandte Ende der ersten Feder (49) an einer am Käfig (47) in Längsrichtung verschiebbaren Stützring (45) abgestützt ist.

7. Anhänger-Steuerventil nach einem der vorangehenden Ansprüche, dadurch gekennzeicnet, daß das dem ausgesteuerten Bremsdruck ausgesetzte Ende des zweiten Rückwirkkolbens (31) gegenüber einem zweiten Stützring (55) wirkt, welcher die zweite Feder (51) abstützt und gleichfalls entlang des Käfigs (47) verschiebbar ist.

8. Anhänger-Steuerventil nach einem der vorangehenden Ansprüche, dadurch gekennzeichnet, daß sich der Steuerkolben (19) mittels eines zylindrischen Fortsatzes (23) durch den ersten Rückwirkkolben (27) hindurch erstreckt, daß der erste Rückwirkkolben an seinem Innenumfang gegenüber dem Fortsatz (23) und an seinem Außenumfang gegenüber dem Innenumfang des zweiten Rückwirkkolbens (31) unter Abdichtung geführt ist, und daß der Käfig (47) der beiden Federn (49,51) in dem dem ausgesteuerten Bremsdruck unterliegenden Raum zwischen dem ersten Rückwirkkolben und dem Innenumfang des zweiten Rückwirkkolbens, parallel zum Fortsatz (23) sich erstreckend, vorgesehen ist, und daß die beiden Stützringe (45,55) der beiden Federn längsverschieblich an einem Fortsatz (53) des Käfigs (47) geführt sind, wobei der Fortsatz (53) mittels eines Gewindes (54) mit einem Flansch des Gehäuses verschraubt ist.

9. Anhänger-Steuerventil nach Anspruch 7, dadurch gekennzeichnet, daß der Fortsatz (53) positionsveränderlich mit dem Gehäuse verschraubt ist.

10. Anhänger-Steuerventil nach einem der vorangehenden Ansprüche, dadurch gekennzeichnet, daß der Fortsatz (23) des Steuerkolbens (19) mittels einer kardanischen Aufhängung (21) an einem Kolbenschaft (59) des Steuerkolbens, relativ zu diesem drehbar, angebracht ist und in seinem Inneren einen durch ein einführbares Werkzeug betätigbaren Schraubeinsatz (41) trägt, derart, daß durch Eingriff am Schraubeinsatz der Fortsatz (23) relativ zum Steuerkolben (19) drehbar ist, und daß am Außenumfang des Fortsatzes (23) Keile (37) ausgebildet sind, welche in Nuten (39) am Innenumfang der den Mitnehmerbund tragenden Mitnehmerhülse eingreifen, so daß die Mitnehmerhülse (35) zusammen mit dem Fortsatz (23) drehbar, jedoch in Längsrichtung relativ zu diesem verschiebbar ist.

11. Anhänger-Steuerventil nach Anspruch 10, dadurch gekennzeichnet, daß zwischen dem Fortsatz (53) und dem Kolbenschaft (59) ein Spalt (57) besteht, welcher die Kammer zwischen dem Steuerkolben und den beiden Rückwirkkolben durch den hohlen Fortsatz (23) hindurch mit der Entlüftungsverbindung des Ventilmechanismus verbindet.

12. Anhänger-Steuerventil nach Anspruch 9, gekennzeichnet durch eine Vorrichtung, mittels welcher der Einstellbereich der Voreilung des ausgesteuerten Bremsdruckes begrenzbar ist.

13. Anhänger-Steuerventil nach Anspruch 12, gekennzeichnet durch folgende Merkmale:
a) zwischen einer Schulter des Steuerkolbens (19) und dem unter Abstand befindlichen zugewandten Ende des Fortsatzes (23) sind miteinander im Dreheingriff befindliche Ringe (65) vorgesehen;
b) der unmittelbar an der Schulter des Steuerkolbens (19) anliegende Ring (65) ist mit diesem in formschlüssigem Eingriff; und
c) das Ende des Fortsatzes (23) greift mittels eines Nocken in eine eine begrenzte Drehung zulassende Führung des nächstliegenden Ringes ein, welcher seinerseits mittels eines Nocken in eine entsprechende Führung des nächstliegenden Ringes eingreift, derart, daß der Anzahl der Ringe entsprechend eine begrenzte Relativdrehung des Fortsatzes (23) gegenüber dem Steuerkolben (19) erzielbar ist.

14. Anhänger-Steuerventil nach Anspruch 12, dadurch gekennzeichnet, daß der formschlüssige Eingriff zwischen dem der Schulter des Steuerkolbens zugewandten Ring (65) mit dem Steuerkolben durch Lösen der Stellschraube (61) lösbar ist.

15. Anhänger-Steuerventil nach einem der vorangehenden Ansprüche, bei Verwendung von zwei Steuerkolben, dadurch gekennzeichnet, daß zwischen den bei den Steuerkolben eine Wirkflächen-Entlastung besteht.
